# EUROPEAN PATENT APPLICATION

(11) **EP 1 503 589 A1**
(43) Date of publication of application: **02.02.2005**
(21) Application number: 04254391.8
(22) Date of filing: 22.07.2004
(51) Int. Cl.: H04N 7/16, H04N 5/445

(54) **Apparatus and method for providing advertisements on digital tv**

(30) Priority: 30.07.2003 KR 2003052843
(71) Applicant: Samsung Electronics Co., Ltd., Suwon-si, Gyeonggi-do (KR)
(72) Inventor: Lee, Jong-hyuk, Seoul (KR)
(74) Representative: Waddington, Richard

(57) **Abstract**

Disclosed are an apparatus and method for providing advertisements on digital TV. The apparatus includes a system information processing unit (340) for receiving system information data transmitted by a broadcast station and extracting channel information and advertisement data from the received system information data, and a display unit (700) for displaying the extracted channel information and advertisement data. The method includes the steps of receiving system information data transmitted by a broadcast station, extracting channel information and advertisement data from the received system information (SI) data and storing the extracted channel information and advertisement data, and displaying the stored channel information and advertisement data on screen when a user changes channels. Therefore, since the advertisement data and channel information are displayed on the screen when the user changes channels, there is an advantage in that the user can obtain some useful information from the displayed advertisement data and living information.

## Description

The present invention relates to an apparatus and method for providing advertisements on digital TV. More particularly, the present invention relates to an apparatus and method for providing advertisements on digital TV, wherein when a user selects a new channel, advertisement data can be displayed on the screen together with information on the new channel as changed.

To provide advertisements on digital broadcast TV, a method for providing advertisements using audio/video data has been heretofore proposed. In such a case, however, since the volume of data is very large, the transmission of data may be delayed due to the transmission load. As a result, there is a problem in that the advertisements cannot be rapidly displayed on the screen of a user.

Further, another method for providing specific advertisements that have been beforehand determined depending on the channel the user views has been also disclosed. In this case, it depends on the channel selection by the user whether the specific advertisements are provided. Therefore, there is another problem in that the advertisements cannot be effectively provided to the user, since the previously determined advertisement is not displayed when the user does not select a specific channel.

On the other hand, in order to provide TV viewers with better service, digital broadcast TV offers viewers currently broadcast service and event information by transmitting additional system information as well as basic MPEG-2 (Moving Picture Experts Group - 2) audio/video data to the viewers.

The present invention is conceived to solve the aforementioned problems.

According to the present invention there is provided an apparatus and method as set forth in the appended claims. Preferred features of the invention will be apparent from the dependent claims, and the description which follows.

According to an aspect of the present invention there is provided an apparatus and method for providing advertisements on digital TV wherein the channel information and advertisement data are displayed on the screen of the digital TV when a user selects a new channel as changed.

According to another aspect of the present invention there is provided an apparatus and method for providing advertisements on digital TV wherein the channel information and advertisement data are displayed on the screen of the digital TV by using system information (SI) data containing advertisement data, when a user selects a new channel as changed.

According to another aspect of the present invention, there is provided an apparatus for providing advertisements on digital TV, which comprises a system information processing unit for receiving system information data transmitted by a broadcast station and extracting channel information and advertisement data from the received system information data, and a display unit for displaying the extracted channel information and advertisement data.

According to another aspect of the present invention, there is also provided a method for advertisements on digital TV, which comprises the steps of receiving system information data transmitted by a broadcast station, extracting channel information and advertisement data from the received SI data and storing the extracted channel information and advertisement data, and displaying the stored channel information and advertisement data on screen when a user changes channels.

For a better understanding of the invention, and to show how embodiments of the same may be carried into effect, reference will now be made, by way of example, to the accompanying diagrammatic drawings in which:
Figure 1 is a block diagram schematically illustrating an apparatus for providing advertisements on digital TV in accordance with an embodiment of the present invention;
Figure 2 is a flowchart schematically illustrating a method for providing advertisements on digital TV in accordance with an embodiment of the present invention;
Figure 3 is a diagram illustrating a bit stream syntax of a general VCT (Virtual Channel Table) for terrestrial applications; and
Figure 4 is a diagram illustrating the bit stream syntax of the VCT with an advertisement information table applied thereto in accordance with an embodiment of the present invention.

First, system information data will be briefly described. The PSIP (Program and System Information Protocol) has been proposed as one of the ATSC (Advanced Television Systems Committee) standards for digital broadcast TV. The PSIP integrates electronic program guide (hereinafter referred to as "EPG") and system information (SI).

More specifically, the PSIP is composed of various tables so that the A/V data formed in MPEG-2 video and AC-3 audio formats can be received/transmitted and information about the channels of respective broadcasting stations and the programs in the channels can be transmitted. Further, the PSIP can support a main function of providing A/V services for the desired broadcast through the channel selection and an additional function of providing EPGs for the desired broadcast programs, i.e., broadcast guide services.

At this time, channel information for use in channel selection and information on the packet identification number (PID) for receiving the A/V data are transmitted via a Virtual Channel Table (hereinafter, referred to as "VCT"), whereas EPG information about the broadcast programs of the respective channels is transmitted via an Event Information Table (EIT). Moreover, the PSIP includes a System Time Table (STT) for the time information, a Rating Region Table (RRT) for transmitting program rating information on geographical regions and program review councils, an Extended Text Table for providing additional descriptions on the channels and broadcast programs, a Master Guide Table (MGT) for managing the versions of tables and the PID, and the like. Hereinafter, an exemplary embodiment of the present invention will be described in detail with reference to the accompanying drawings.

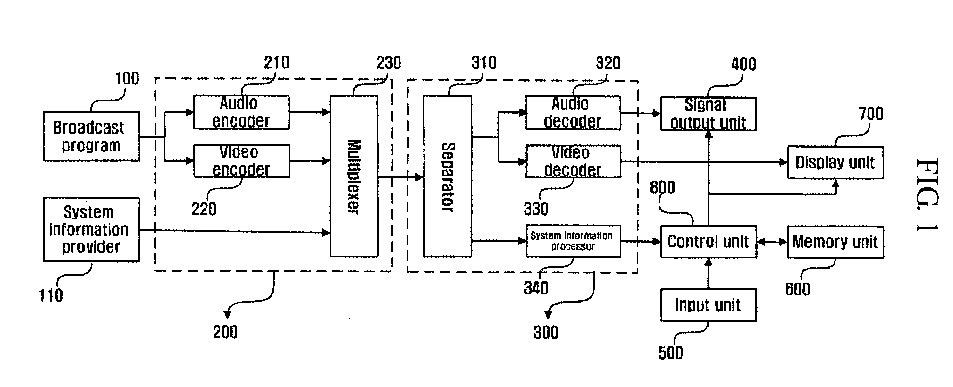

Figures. 1 is a block diagram schematically illustrating an apparatus for providing advertisements on digital TV according to an embodiment of the present invention. Referring to this figure, the advertisement providing apparatus of the present invention comprises a broadcast program 100, a system information providing unit 110 for providing system information ("SI"), a data transmitting unit 200, a data receiving unit 300, an output unit 400 for outputting audio signals, an input unit 500, a memory unit 600, a display unit 700 and a control unit 800.

The data transmitting unit 200 includes audio and video encoders 210 and 220 for encoding audio and video data for the broadcast program 100, respectively, and a multiplexer 230 for transmitting the encoded audio and video data and the SI data in the form of a MPEG-2 stream over satellite, terrestrial, cable broadcasts, and the like.

The data receiving unit 300 includes a separator 310 for separating the audio and video data and the SI data from the MPEG-2 stream transmitted by the multiplexer 230 and sending the separated data, audio and video decoders 320 and 330 for decoding the encoded audio and video data and outputting the decoded data, and a SI processor 340 for processing the SI data. Here, the SI processor 340 extracts channel information and advertisement data from the SI data transmitted from the separator 310. The SI data refer to additional service information other than the audio and video data. For example, the SI data can be understood as detailed information about the broadcast programs (for example, channel number, channel name, program title, date/time, playing time and recording time), advertisement data (for example, simple text advertisements and living information), and the like.

The input unit 500 recognizes commands issued in response to operations of the user for respective input devices and receives the recognized commands.

The memory unit 600 functions to store the channel information and advertisement data extracted by the SI processor 340 and provide the desired channel information and advertisement data at the request of the control unit 800 for the channel information and advertisement data when a user selects a new channel.

The display unit 700 displays the data received from the data receiving unit 300. More specifically, the display unit 700 causes the channel information and advertisement data to be simultaneously displayed at a specific location on screen when the user selects a new channel, and then causes them to disappear after a predetermined period of time.

The control unit 800 controls the operation of a digital TV. More specifically, the control unit 800 causes both the broadcast signals received in the data receiving unit 300 and the channel information and advertisement data when the user selects a new channel to be displayed on the screen and also causes the channel information and advertisement data extracted by the SI processor 340 to be stored in the memory unit 600.

In the meantime, the present invention may further comprise an additional POD (Point of Deployment) to allow the broadcast data transmitted from a broadcast station to be delivered to the data receiving unit 300. More specifically, the POD receives and decrypts the broadcast data that have been encrypted and transmitted by a broadcast station. Then, the POD itself is encrypted relative to the decrypted broadcast data and sends the encrypted data to the data receiving unit 300, thereby allowing only the user with the specific POD to view the relevant broadcast data.

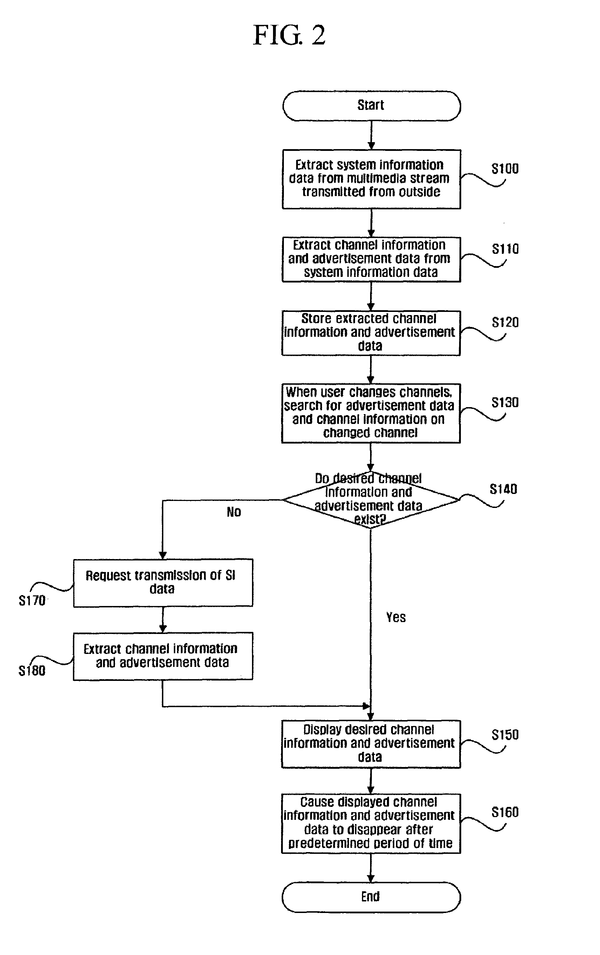

Figures. 2 is a flowchart schematically illustrating a method for providing advertisements on digital TV in accordance with the present invention. First, if broadcast programs and SI data are received from a broadcast station, audio and video data from the broadcast programs are encoded by the audio and video encoders 210 and 220, respectively, and the encoded audio and video data and the SI data are then transmitted in the form of a stream by the multiplexer 230. Here, the SI data include the VCT, and the advertisements are transmitted as embedded in the "short_name" and "long_name" fields within the VCT. In other words, the broadcast station name, classification code and advertisement texts are transmitted as embedded in the name fields within the VCT, or the advertisement data are transmitted as embedded in a configured advertisement-information-table.

Thereafter, the separator 310 separates the audio and video data and the SI data, and then transmits the audio data, video data and SI data to the audio decoder 320, video decoder 330, and SI data processor 340, respectively.

The transmitted encoded audio and video data are decoded via the audio and video decoders 320 and 330, respectively, and the channel information and advertisement data are extracted from the transmitted SI data by the SI data processor 340 (S100 and S110). Subsequently, the extracted channel information and advertisement data are stored in the memory unit 600 (S120).

If the user changes channels using the input device, the input unit 500 receives input signals produced according to the user's selection and sends them to the control unit 800. Subsequently, the control unit 800 requests the memory unit 600 to search for channel information on the selected channel (for example, channel number, channel name, and the like) and the advertisement data (S130).

If it is determined from the search result that the desired channel information is present in the memory unit 600, the control unit 800 delivers the searched desired channel information and the advertisement data to the display unit 700, which in turn causes the received channel information and advertisement data to be displayed on the screen (S140 and S150).

If the desired channel information is not stored in the memory unit 600, the control unit 800 requests the data receiving unit 300 to send the SI data and extracts the desired channel information from the received SI data (S170 and S180), and then displays the extracted channel information and advertisement data on the screen.

The displayed channel information and advertisement data will disappear after a predetermined period of time (for example, about 3 to 5 seconds) (S160). Here, the channel information and advertisement data are simultaneously displayed upon the channel change, and the displayed channel information and advertisement data simultaneously disappear after the predetermined period of time.

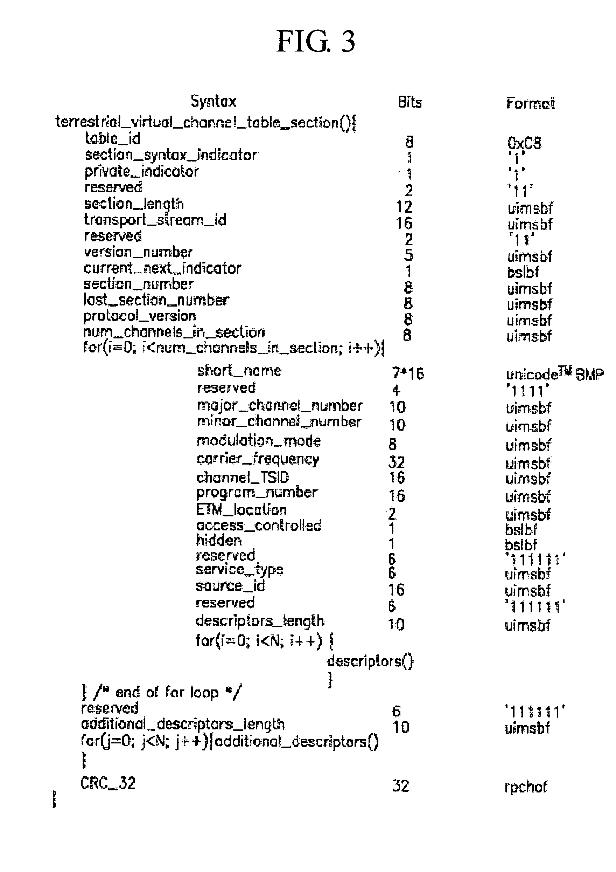

Figures. 3 is a diagram illustrating bit stream syntax of the general VCT for terrestrial applications, which is specified in A/65. The basic information contained in the VCT table includes Transport Stream ID, channel number (major and minor), short channel name, carrier frequency, program number, and the like, whereas the additional information is contained in a VCT descriptor.

As illustrated in this figure, a table identifier "table_id" for the VCT has a value of 0xC8 and the PID for the VCT has a value of 0x1FFB. Terms "version_number", "section_number", and "last_section_number" represent the version number of the VCT, the number of the VCT section, and the number of the last section of the complete VCT, respectively. Further, a term "num_channels_in_section" specifies the total number of virtual channels present in the VCT section.

Furthermore, the term "short_name" in an iteration statement of a 'for' loop represents the name of virtual channel, and a term "major_channel_number" represents the 'major' channel number associated with the virtual channel defined in the iteration statement. The respective virtual channels should be associated with the major and minor channel numbers which act as a user reference number for the relevant virtual channel.

The term "program_number" is used to reference the virtual channel in which MPEG-2 PAT (Program Association Table) and PMT (Program Map Table) are defined, and is equal to a program number in the PAT/PMT. Here, the PAT describes the components of the program corresponding to each program number, which indicates the PID of a transport packet for carrying the PMT. The PMT describes the program identification number, the list of the PIDs of the transport packet in which the individual bit streams including video and audio data of the program are carried, and the other related information.

The term "source_id" represents a program source associated with the relevant virtual channel. Here, a source refers to a specific source such as a video, text, data or audio source. The value of "source_id" will be unique within the Transport Stream that carries the VCT. Further, the term "descriptor_length" represents the total length of the descriptor for the relevant virtual channel, and the term "additional_descriptor_length" represents the total length of all the accompanying VCT descriptors. That is, the VCT carries data for each of the virtual channels through the iteration statement of the 'for' loop.

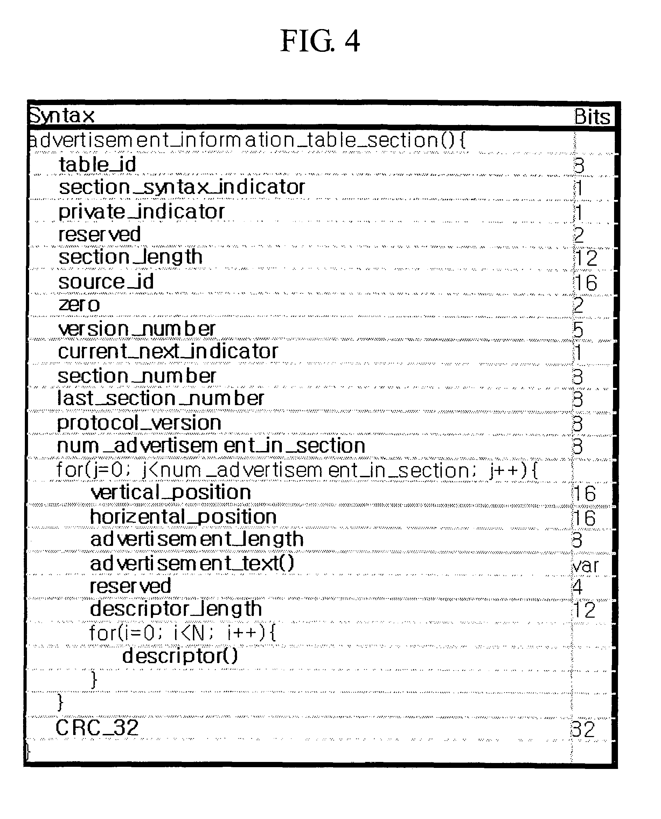

Figures. 4 is a diagram illustrating the bit stream syntax of the VCT according to an embodiment of the present invention, in which the advertisement information table is inserted in the bit stream syntax of the VCT.

In the exemplary embodiment of the present invention, the advertisement data are incorporated into the iteration statement of the 'for' loop, which carries data of the virtual channels, in the general VCT described in Figures. 3.

Referring to this figure, the "version_number" represents the version number of the VCT, the "section_number" represents the number of the VCT section, and the "last_section_number" specifies the number of the last section of the complete VCT. In addition, a term "num_advertisement_in_section" specifies the number of all the advertisements present in the VCT section.

The term "advertisement_length" defined in the iteration statement of the 'for' loop represents the total length of the advertisement, and the term "descriptor_length" represents a total length of the descriptor for the desired advertisement. Here, the advertisements are repeatedly displayed as many times as the length specified in the iteration statement of the 'for' loop.

Consequently, the present invention is configured in such a manner that the advertisement data are displayed together with the channel information by inserting the advertisement data into the bit stream syntax of the VCT. Thus, the advertisements can be provided to the user even in a short period of time.

According to the present invention so configured, since the advertisements and channel information are displayed on the screen for a short period of time when the user changes channels, any advertisement text and living information can be advantageously provided to the user without offending the user. Therefore, there is an advantage in that the user can obtain some useful information from the advertisements and living information displayed.

Further, since a spot advertisement can be provided for a short period of time while the channel information is displayed, there is another advantage in that the broadcast service provider can make additional profit through the spot advertisement.

Furthermore, there is a further advantage in that a variety of advertisements can be provided to the user merely by adding the advertisement data to the SI data.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for providing advertisements on digital TV, comprising:
a system information processing unit (340) for receiving system information data transmitted by a broadcast station and extracting channel information and advertisement data from the received system information data; and
a display unit (700) for displaying the extracted channel information and advertisement data.

2. The apparatus as claimed in claim 1, further comprising:
a memory unit (600) for storing the channel information and advertisement data extracted by the system information processing unit; and
a control unit (800) for, when a user selects a new channel, causing the stored advertisement data and information on the new channel to be displayed.

3. The apparatus as claimed in claim 1 or claim 2, further comprising an input unit (500) for receiving a signal that is generated when a user selects a new channel.

4. The apparatus as claimed in any preceding claim, wherein the advertisement data are displayed when a user selects a new channel.

5. The apparatus as claimed in any preceding claim, wherein the advertisement data are displayed simultaneously with the channel information.

6. The apparatus as claimed in any preceding claim, wherein if desired channel information is stored in the memory unit (600), the channel information stored in the memory unit (600) is displayed; 'or if it is not stored in the memory unit (600), the channel information obtained by requesting a data receiving unit (300) to receive the system information data and extract desired channel information from the received system information data is displayed.

7. A method for providing advertisements on digital TV, comprising the steps of:
receiving system information data transmitted by a broadcast station;
extracting channel information and advertisement data from the received system information data and storing the extracted channel information and advertisement data; and
displaying the stored channel information and advertisement data on a screen when a user selects a new channel.

8. The method as claimed in claim 7, wherein the advertisement data are displayed simultaneously with the channel information.

9. The method as claimed in claim 7 or claim 8, wherein the displaying step comprises the steps of:
searching a memory unit (600) for desired channel information when a user selects a new channel;
searching the memory unit (600) for the advertisement data corresponding to the searched channel information; and
displaying the search channel information and advertisement data on the screen.

10. The method as claimed in claim 9, wherein the displaying step comprises the steps of:
requesting a data receiving unit (300) to receive the system information data if desired channel information is not stored in the memory unit (600); and
extracting the channel information from the received system information data and displaying the desired channel information.

11. A method for providing advertisements on digital TV, comprising the steps of:
generating system information data with advertisement data contained therein; and
multiplexing and transmitting the generated system information data and encoded audio and video data.

12. The method as claimed in claim 11, wherein the system information data are constructed in compliance with a standard specification.

13. The method as claimed in claim 12, wherein the advertisement data are inserted into a virtual channel table in the system information data.
